# FASCICULE DE BREVET EUROPEEN

(11) **EP 1 790 503 B1**
(45) Date de publication et mention de la délivrance du brevet: **11.02.2009**
(21) Numéro de dépôt: 06291778.6
(22) Date de dépôt: 16.11.2006
(51) Int. Cl.: B60C 23/04, G01P 3/44

(54) **Equipement d'extrémité d'essieu de véhicule, notamment aéronef**
Endanordnung einer Fahrzeugachse, insbesondere für Flugzeuge
Endportion of an axle of a vehicle, especially for aircrafts

(30) Priorité: 29.11.2005 FR 0512070; 13.04.2006 FR 0603265
(43) Date de publication de la demande: 30.05.2007
(73) Titulaire: MESSIER-BUGATTI, 78140 Vélizy Villacoublay (FR)
(72) Inventeur: Pradier, Jean-Clair, 78800 Houilles (FR); Evenor, Eric, 95800 Courdimanche (FR); Lavaud, Thomas, 92190 Meudon (FR); Maes, Bertrand, 92170 Vanves (FR)
(74) Mandataire: Parzy, Benjamin Alain

(56) Documents cités:
- DE-A1- 3 801 277
- FR-A- 2 665 417
- US-A1- 2004 173 014
- US-A1- 2005 046 558

## Description

L'invention concerne un équipement d'extrémité d'essieu de véhicule, notamment aéronef.

### ARRIERE-PLAN DE L'INVENTION

On connaît des équipements d'extrémité d'essieu de véhicule, notamment aéronef, comportant une partie fixe destinée à être disposée dans l'essieu et une partie tournante destinée à être solidarisé à une roue portée par l'essieu.

Par exemple, un tel équipement comporte un tachymètre pour mesurer une vitesse de rotation de la roue, et un capteur de pression pour mesurer la pression régnant dans le pneumatique équipant la roue.

Le capteur de pression est relié par un câble à la partie tournante. Lors d'un démontage de la roue, l'opérateur doit démonter la partie tournante ainsi que le capteur de pression, de sorte que le capteur de pression et la connexion entre la partie tournante et le capteur de pression risquent d'être endommagés.

Un équipement conforme au préambule de la revendication 1 est décrit dans le document FR-2665417.

### OBJET DE L'INVENTION

L'invention a pour objet un équipement ne présentant pas l'inconvénient précité.

### BREVE DESCRIPTION DE L'INVENTION

En vue de la réalisation de ce but, on propose un équipement d'extrémité d'essieu de véhicule, notamment aéronef, comportant une partie fixe destinée à être solidarisée à l'essieu et une partie tournante destinée à être solidarisé à une roue portée par l'essieu, l'équipement comportant un premier moyen de liaison à distance pour mettre en relation électromagnétique sans contact un capteur monté sur la roue et la partie tournante de l'équipement.

Ainsi, il devient possible de démonter la partie tournante sans se soucier du capteur, qui n'ayant aucune liaison mécanique ou électrique avec la partie tournante, peut dès lors être laissée sur la roue sans risque de dommage.

### BREVE DESCRIPTION DES DESSINS

L'invention sera mieux comprise à la lumière de la description qui suit en référence aux figures des dessins annexés parmi lesquelles :
- la figure 1 est une vue en coupe d'une extrémité d'essieu d'aéronef équipé d'un équipement selon un premier mode de réalisation de l'invention ;
- la figure 2 est une vue en perspective d'une partie de l'équipement illustré à la figure 1, le manchon et le tachymètre ayant été enlevés ;
- la figure 3 est une vue en coupe d'une extrémité d'essieu d'aéronef équipé d'un équipement selon un deuxième mode de réalisation de l'invention intégrant un ventilateur de refroidissement du frein équipant la roue;
- la figure 4 est une vue en coupe d'une extrémité d'essieu d'aéronef équipé d'un équipement selon un troisième mode de réalisation de l'invention;
- la figure 5 est une vue en perspective de l'équipement illustré à la figure 4;
- la figure 6 est une vue en coupe analogue à celle de la figure 1 d'une variante du premier mode de réalisation ;
- la figure 7 est une vue en coupe d'une extrémité d'essieu équipé d'un équipement selon un quatrième mode de réalisation de l'invention;
- la figure 8 est une vue en perspective partielle de la roue de la figure 7 au niveau du capteur de pression.

### DESCRIPTION DETAILLEE DE L'INVENTION

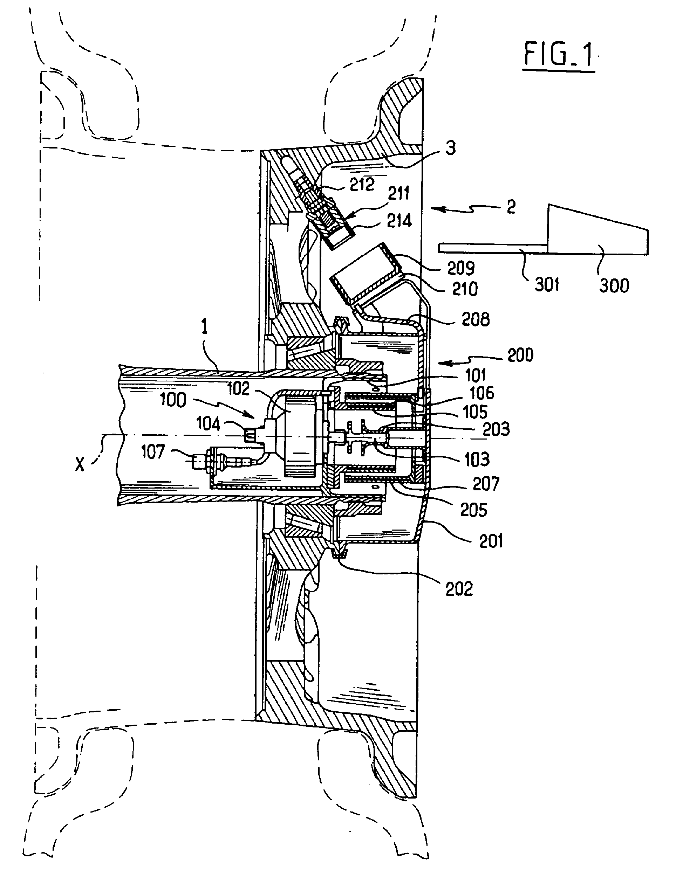

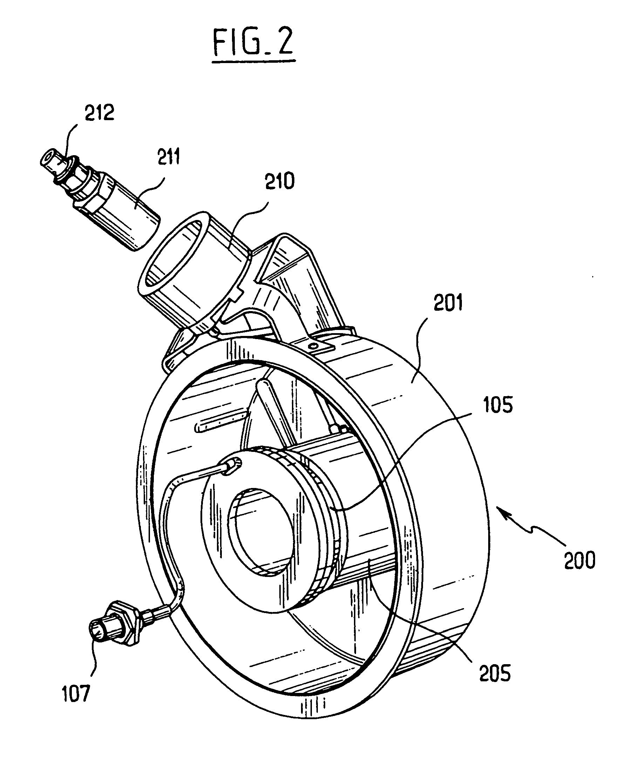

Conformément à un premier mode de réalisation illustré aux figures 1 et 2, l'équipement de l'invention est ici associé à une extrémité d'essieu 1 portant une roue 2 dont on aperçoit ici une demi-jante 3 (l'autre demi-jante étant silhouettée en pointillés).

L'équipement illustré ici permet de mesurer en continu la vitesse de rotation de la roue 2 ainsi que la pression régnant dans le pneumatique (évoqué en pointillés) monté sur la roue 2.

A cet effet, l'équipement comporte une partie fixe 100 comprenant un manchon 101 inséré dans l'essieu 1 qui porte un tachymètre 102 ayant un arbre 103 qui s'étend selon l'axe de rotation X de la roue 2.

L'équipement comporte également une partie tournant 200 comprenant un capot 201 solidarisé à la demi-jante 3 par un collier de serrage 202. Le capot 201 porte intérieurement un entraîneur 203 adapté à coopérer avec l'arbre 103 du tachymètre 102 pour entraîner ledit arbre en rotation lorsque la roue 2 tourne. Le tachymètre 102 comporte un premier connecteur 104 auquel vient se raccorder un premier câble (non représenté) qui passe à l'intérieur de l'essieu.

Selon l'invention, la partie fixe 100 comporte une partie cylindrique 105 qui s'étend concentriquement à l'axe de rotation X de la roue 2 et qui porte une première antenne 106, ici un enroulement d'un conducteur électrique. La première antenne 106 est reliée à un deuxième connecteur 107 porté par une extension du manchon 101 auquel vient se raccorder un deuxième câble (non représenté) qui passe à l'intérieur de l'essieu.

La partie tournante comporte une partie cylindrique 205 qui s'étend concentriquement à l'axe de rotation X de la roue 2 et qui porte une deuxième antenne 207, également constituée d'un enroulement de conducteur électrique. Celle-ci s'étend en regard de la première antenne 106 de la partie fixe 100 de sorte que les deux antennes sont en interaction électromagnétique.

La deuxième antenne 207 est reliée par un câble 208 à une troisième antenne 209 portée par une excroissance 210 du capot 201 et constituée d'un enroulement de conducteur électrique.

En regard de la troisième antenne 209 s'étend un capteur de pression 211 qui ici est vissé sur une valve 212 auto-obturante, elle-même vissée sur la demi-jante 3 et permettant le démontage du capteur de pression 211 sans que ce démontage provoque un dégonflage du pneumatique. La valve 212 est disposée en extrémité d'un orifice communiquant au travers de la demi-jante 3 avec l'intérieur du pneumatique.

Le capteur de pression 211 comporte une quatrième antenne 214 constituée d'un enroulement de conducteur électrique qui s'étend en regard de la troisième antenne 209 de sorte que les deux antennes sont en interaction électromagnétique. Le capteur de pression 211 comporte un organe sensible à la pression qui est associé à la quatrième antenne 214 de façon à faire varier au moins une caractéristique électromagnétique de la quatrième antenne 214 en réponse à un niveau de pression dans le pneumatique.

Le fonctionnement du dispositif de l'invention est le suivant. Quand la roue 2 tourne, l'entraîneur 203 qui tourne avec la roue 2 entraîne en rotation l'arbre 103 du tachymètre, qui produit en réponse un signal représentatif de la vitesse de rotation de la roue 2.

Par ailleurs, que la roue 2 tourne ou reste immobile, les première et seconde antennes d'une part et les troisième et quatrième antennes d'autre part restent en interaction électromagnétique, les deuxième et troisième antennes étant en outre électriquement reliées. Ainsi, les caractéristiques électromagnétiques de la première antenne 106, celle qui est directement reliée au connecteur 107, sont influencées au moyen de la chaîne électromagnétique ainsi créée par le capteur de pression 211. Il suffit dès lors d'envoyer un courant dans la première antenne 106 et de lire la tension aux bornes de ladite antenne pour obtenir un signal représentatif de la pression régnant dans le pneumatique.

Le dispositif de l'invention présente plusieurs avantages:
- le démontage de la roue 2 est très aisé. Il suffit de retirer le collier de serrage 202 pour retirer le capot 201. Celui-ci n'étant lié par aucun fil électrique ni aux connecteurs 104,107 ni au capteur de pression 211, il se retire très facilement sans risque de dégradation d'une connexion. En outre, la seule liaison mécanique entre la partie fixe 100 et la partie tournante 200 est constituée par la coopération de l'entraîneur 203 avec l'arbre 103 du tachymètre 102. Le retrait du capot 201 déconnecte l'entraîneur 203 de l'arbre 103 et permet l'accès à l'écrou maintenant la roue 2. Pour la remise en place du capot 201, il suffit de veiller que l'entraîneur 203 coopère bien avec l'arbre 103 du tachymètre 102, et que la troisième antenne 209 soit globalement en regard du capteur de pression 211;
- le capteur de pression 211 peut être changé indépendamment du reste du dispositif de l'invention. En outre, l'usage d'une valve auto-obturante facilite grandement ce changement ;
- il est possible, sous aucun démontage, de tester le capteur de pression 211 à l'aide d'un boîtier extérieur 300 muni d'une antenne 301 que l'on approche de l'antenne 214 du capteur de pression 211, de sorte que les deux antennes soient en interaction électromagnétique. A cet effet, le boîtier extérieur comprend une source d'alimentation électrique adaptée à faire circuler un courant dans l'antenne 301. La tension aux bornes de ladite antenne dépend de la pression régnant dans le pneumatique, ce qui permet à l'opérateur de connaître la pression dans le pneumatique et de décider éventuellement d'une action de maintenance (regonflage, changement de roue, ou changement de capteur en cas de défaillance de celui-ci);
- les chaînes électriques et mécaniques du tachymètre et du capteur de pression sont complètement ségréguées, de sorte que la défaillance de l'un n'entraîne pas la défaillance de l'autre.

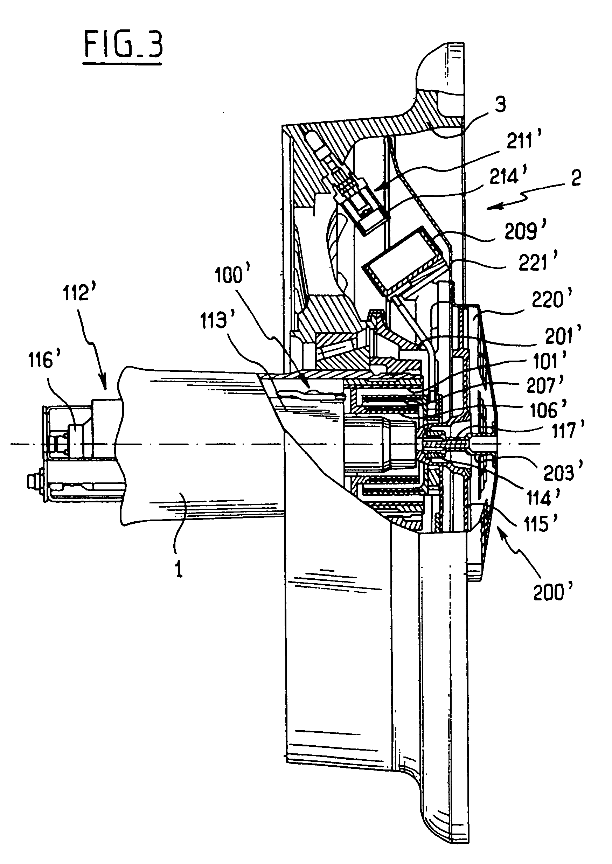

Conformément à un deuxième mode de réalisation illustré à la figure 3, l'équipement de l'invention peut également incorporer un ventilateur de refroidissement du frein équipant la roue 2. Les références des éléments communs avec le premier mode de réalisation portent la même référence que sur les figures 1,2, en étant primés.

De la même façon que précédemment, le manchon 101' porte une première antenne 106'. Le capot 201' porte une deuxième antenne 207' en regard de la première antenne 106' de sorte que les première et deuxième antenne sont en interaction électromagnétique. Le capot 201' porte une troisième antenne 209' reliée électriquement à la deuxième antenne 207'. Un capteur de pression 211' est implanté sur la demi-jante 3 et comporte une quatrième antenne 214' s'étendant en regard de la troisième antenne 209' de sorte que les troisième et quatrième antennes sont en interaction électromagnétique.

Cet équipement diffère du précédent par le remplacement du tachymètre 102 par un combiné 112' moteur/tachymètre. Le combiné 112' comporte un moteur 113' qui est fixé au manchon 101' et dont on aperçoit l'arbre creux 114' saillir vers l'extrémité de l'essieu 1 et recevoir à son extrémité la turbine 115' d'un ventilateur de refroidissement. Le combiné 112' comporte également un tachymètre 116', placé sur l'arrière du moteur 113', et dont l'arbre 117' s'étend dans l'arbre creux 114' du moteur 113' pour saillir en extrémité de ce dernier.

La partie tournante 200' de l'équipement comporte un capot 201' qui reçoit un carter 220' de protection de la turbine 115', ainsi qu'un cache 221' qui recouvre l'ensemble du creux de la demi-jante 3.

Pour démonter la roue 2, on commence par retirer le carter 220' et le cache 221', ce qui donne accès à la turbine 115'. On retire l'écrou qui solidarise la turbine 115' à l'arbre creux 114' du moteur 113 pour enlever la turbine 115', puis on retire le capot 201', ce qui donne accès à l'écrou retenant la roue 2.

Comme auparavant, aucun des éléments de l'équipement de l'invention qui sont démontés pour l'accès à la roue n'a de liaison électrique avec le capteur de pression ou tout autre élément, de sorte que le démontage de ces éléments n'induit aucun risque d'endommagement d'une connexion. En outre, la seule liaison mécanique entre la partie fixe 100' et la partie tournante 200' se résume à la coopération entre l'entraîneur 203' (ici solidaire du carter 220'), et l'arbre 117' du tachymètre 116'. Cette liaison est facilement déconnectée par simple retrait du carter 220'.

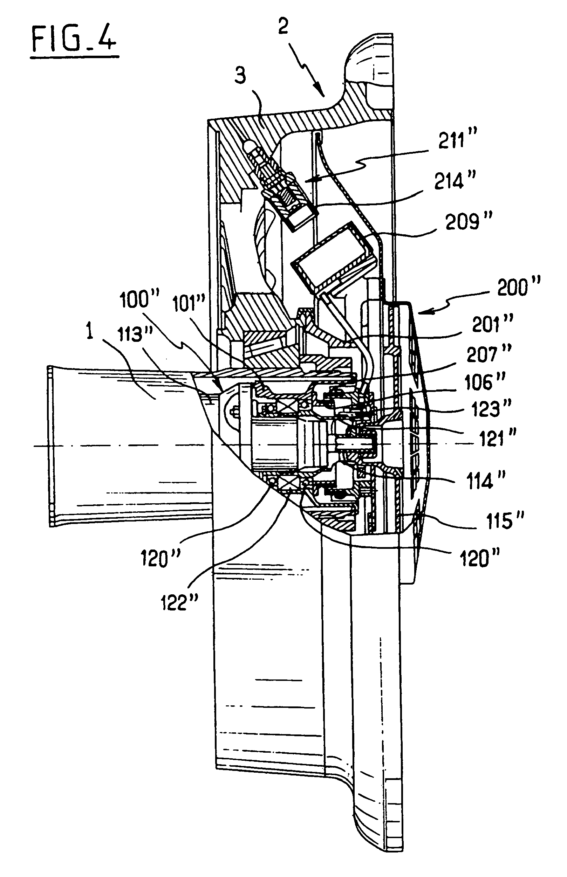

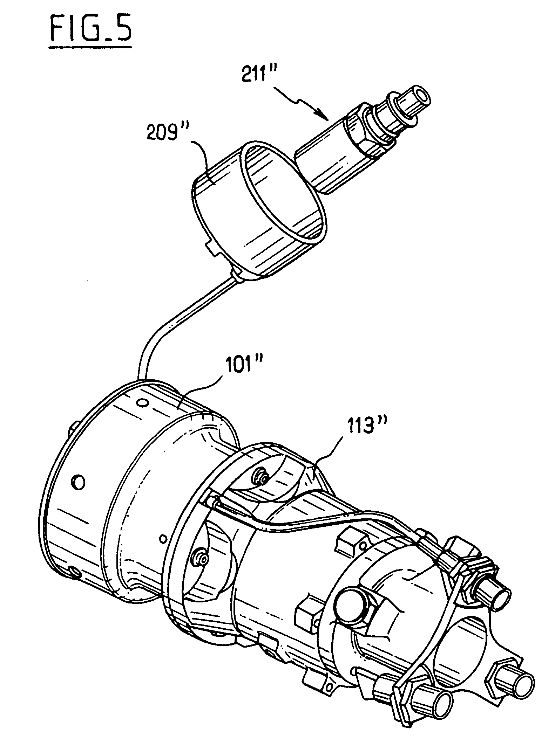

Dans un troisième mode de réalisation illustré aux figures 4 et 5, on utilise toujours un combiné moteur/tachymètre. Cependant, le tachymètre n'est plus placé en arrière du moteur, mais autour de celui-ci. Sur ces figures, les références des éléments communs avec les éléments similaires du deuxième mode de réalisation portent les mêmes références que sur la figure 3, en étant secondés.

Comme cela est visible à la figure 4, le manchon 101'' a une face arrière qui porte le moteur 113'' du combiné 112''. Le moteur a un arbre 114'' qui s'étend pour recevoir une turbine 115'' de ventilateur.

Le manchon 101'' reçoit directement le tachymètre, et, à cet effet, comporte des roulements 120'' qui guident en rotation une douille 121''. Entre le manchon 101'' et la douille 121'' s'étendent des moyens 122'' de mesure de vitesse de rotation (symbolisés par une croix sur le dessins), par exemple à réluctance variable. La douille 121'' s'étend autour de l'extrémité du moteur 113'', en étant libre de tourner par rapport à celui-ci.

La douille 121'' est solidarisée en rotation avec le capot 201'' de la partie tournante 200'' au moyen de vis 123'' (une seule est visible à la figure 4). Ainsi, la rotation de la roue 2 est transmise à la douille 121'', de sorte que les moyens de mesure 122'' génèrent un signal électrique en réponse à la rotation de la douille 121''.

De la même façon que précédemment, le manchon 101'' porte une première antenne 106''. Le capot 201'' porte une deuxième antenne 207'' en regard de la première antenne 106'' de sorte que les première et deuxième antenne sont en interaction électromagnétique. Le capot 201'' porte une troisième antenne 209'' reliée électriquement à la deuxième antenne 207''. Un capteur de pression 211'' est implanté sur la demi-jante 3 et comporte une quatrième antenne 214'' s'étendant en regard de la troisième antenne 209'' de sorte que les troisième et quatrième antennes sont en interaction électromagnétique.

Comme auparavant, aucun des éléments de l'équipement de l'invention qui sont démontés pour l'accès à la roue n'a de liaison électrique avec le capteur de pression ou tout autre élément, de sorte que le démontage de ces éléments n'induit aucun risque d'endommagement d'une connexion. En outre, la seule liaison mécanique entre la partie fixe 100'' et la partie tournante 200'' se résume à l'entraînement par vis 123'' entre la douille 121'' et le capot 201''. Cet entraînement est facilement déconnecté par simple dévissage des vis 123'' qui sont accessibles lorsque la turbine 115'' a été ôtée.

De préférence, entre la deuxième et la troisième antenne, (207/209, 207'/209', 207''/209'') c'est-à-dire les antennes solidaires de la partie tournante, on prévoit un accord électromagnétique, par exemple au moyen de capacités, de sorte que le circuit comprenant la deuxième antenne et la troisième antenne soit à la résonance pour la fréquence du courant d'alimentation de la première antenne (106,106',106''). On augmente ainsi la qualité de la transmission de la chaîne d'acquisition de la pression, ce qui permet de prévoir une distance plus importante entre la troisième et la quatrième antenne (celle qui est solidaire du capteur de pression), permettant ainsi de diminuer le risque de collision entre le capteur de pression et le capot lorsque ce dernier est retiré de la roue.

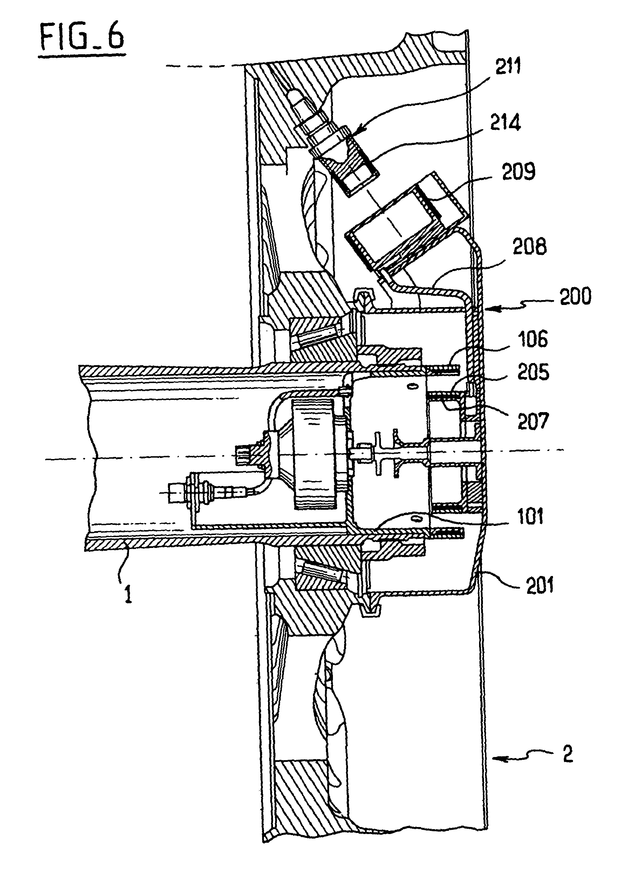

A la figure 6 est illustrée une variante du premier mode de réalisation, dans laquelle la première antenne 106 est portée en extrémité du manchon 101 qui s'étend vers l'extérieur de l'essieu 1. Ainsi, la partie fixe de l'équipement peut ne pas être totalement contenue dans l'essieu, mais en saillir au moins en partie.

Quant à la deuxième antenne 207, elle est toujours portée par la partie cylindrique 205 solidaire du capot 201, mais, cette fois, la partie cylindrique 205 s'étend à l'intérieur du manchon 101, de sorte que la deuxième antenne 207 s'étend à l'intérieur de la première antenne 106. On remarquera que la deuxième antenne ne pénètre pas dans l'essieu 101.

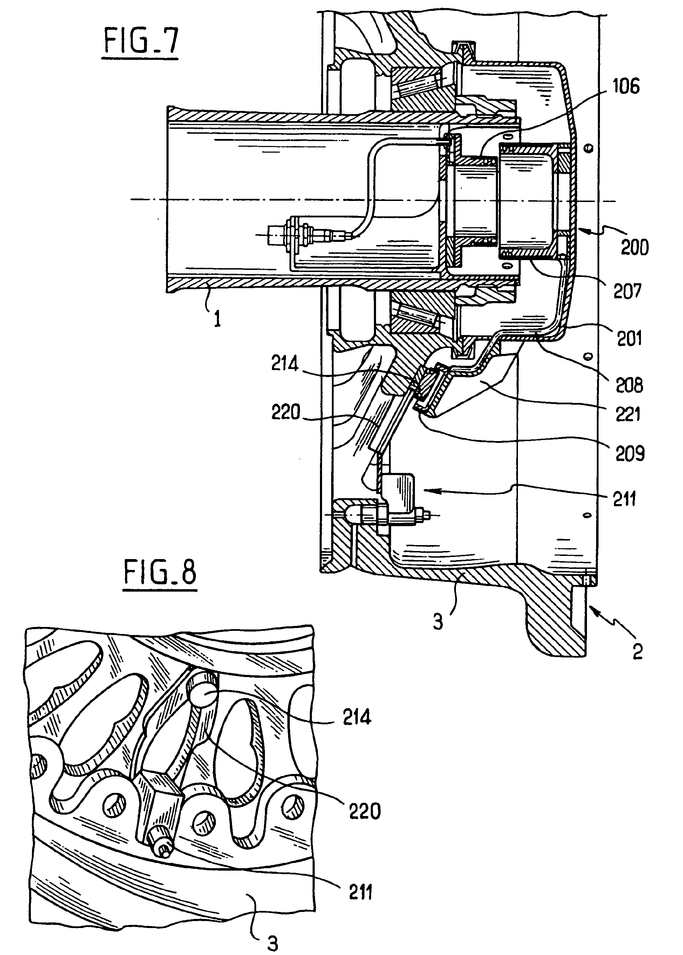

Selon un quatrième mode de réalisation illustré aux figures 7 et 8 qui ne comporte pas de tachymètre, la quatrième antenne 214 n'est plus fixée directement sur le capteur de pression 211 mais est délocalisée pour être rapprochée du capot 201 de la partie tournante 200.

A cet effet, le capteur de pression 211 est associé à un organe porteur 220 qui comporte deux branches qui s'étendent ici contre les flancs des rayons de la demi-jante 3 de la roue 2, en épousant la forme du creux entre lesdits rayons. Les extrémités des branches se rejoignent pour recevoir la quatrième antenne 214, qui est ainsi disposée à proximité du capot 201 de la partie tournante 200. L'organe porteur 220 est prévu pour être enfoncé légèrement à force entre les rayons de la demi-jante 3, ce qui évite toute vibration de la quatrième antenne 214.

L'organe porteur 220 abrite des fils de connexion entre le capteur de pression 211 et la quatrième antenne 214, de sorte que ces fils sont à l'abri des chocs.

Quant à la troisième antenne 209, elle est portée par une excroissance 221 qui s'étend du capot 201 mais qui est beaucoup plus courte que l'excroissance 210 du premier mode de réalisation illustré la figure 1, de sorte que le capot 210 est globalement moins encombrant et plus facile à manipuler.

Le fil de connexion 208 reliant la troisième antenne 209 à la deuxième antenne 207 est complètement abrité par le capot et l'excroissance 221.

On remarquera que la troisième antenne 209 est prévue pour chevaucher la quatrième antenne 214, ce qui constitue pour le monteur une indication de montage quant au calage angulaire du capot 201 par rapport au capteur de pression 211. La troisième antenne 209 et la quatrième antenne sont ainsi beaucoup plus proches l'une de l'autre, ce qui améliore le rendement de la transmission.

L'invention n'est pas limitée à ce qui vient d'être décrit, mais bien au contraire englobe toute variante entrant dans le cadre défini par les revendications.

En particulier, bien que le capteur implanté sur la jante soit ici un capteur de pression, l'invention couvre bien sûr l'utilisation d'autres capteurs, comme un capteur de température.

Bien que l'on ait ici illustré un équipement avec de moyens de liaison à distance comportant pour chacun une paire d'antennes en interaction électromagnétique, on pourra utiliser tout autre moyen de liaison à distance, comme par exemple des moyens infrarouges.

Bien que l'on ait indiqué que l'on utilise deux moyens de liaison à distance, de sorte que la partie tournante n'a de liaison électrique physique ni avec le capteur, ni avec la partie tournante, l'invention couvre également un équipement dont la seule liaison à distance s'étend entre la partie tournante et le capteur. Dans ce cas, il faut prévoir une liaison électrique d'un autre type entre la partie tournante et la partie fixe, par exemple une liaison par balais.

## Revendications

1. Equipement d'extrémité d'essieu de véhicule, notamment aéronef, comportant une partie fixe (100;100';100 ") destinée à être solidarisée à l'essieu (1) et une partie tournante (200;200';200") destinée à être solidarisé à une roue (2) portée par l'essieu, **caractérisé en ce que** l'équipement comporte un premier moyen (209/214;209'/214';209" /214") de liaison à distance pour mettre en relation électromagnétique sans contact un capteur (211;211';211") monté sur la roue (2) et la partie tournante de l'équipement.

2. Equipement selon la revendication 1, dans lequel l'équipement comporte également un deuxième moyen de liaison à distance (106/207;106'/207'; 106 " /207 ") pour mettre en relation électromagnétique la partie tournante et la partie fixe, les premier et deuxième moyens de liaison à distance étant électriquement reliés dans la partie tournante de sorte que le capteur soit, via les moyens de liaison à distance, en relation électromagnétique avec la partie fixe.

3. Equipement selon la revendication 2, dans lequel les premier et deuxième moyens de liaison à distance comportent chacun deux antennes qui comprennent chacune un enroulement de conducteur et qui sont disposées en regard l'une de l'autre pour être en interaction électromagnétique, une antenne (207 ; 207' ; 207") du premier moyen de liaison à distance et une antenne (209 ; 209' ; 209") du deuxième moyen de liaison à distance étant électriquement reliés dans la partie tournante.

4. Equipement selon la revendication 3, dans lequel l'antenne (207 ; 207' ; 207 ") du premier moyen de liaison à distance et l'antenne (209 ; 209' ; 209") du deuxième moyen de liaison à distance qui sont électriquement reliés dans la partie tournante sont intégrées dans un circuit électrique résonnant pour une fréquence d'un courant d'alimentation de l'autre antenne (106 ; 106' ; 106 ") du deuxième moyen de liaison qui est disposé sur la partie fixe.

5. Equipement selon la revendication 1, dans lequel la partie fixe porte un organe tournant (103; 117';121'') celui-ci étant en service entraîné en rotation par la partie tournante par l'intermédiaire de moyens d'entraînement à déconnexion rapide (203; 203' ; 123") .

6. Equipement selon la revendication 1, dans lequel la partie fixe porte un moteur d'entraînement (113' ; 113") d'une turbine (115' ; 115" ) de ventilation d'un frein associé à la roue.

7. Equipement selon la revendication 1, dans lequel le premier moyen de liaison à distance comporte une antenne (214) qui est électriquement reliée au capteur (211) en étant délocalisée de celui-ci pour s'étendre à proximité de la partie tournante (200).

8. Procédé de maintenance d'un équipement selon l'une des revendications précédentes, dans lequel on teste à distance le capteur (211) au moyen d'un boîtier extérieur (300) adapté à être en relation électromagnétique à distance avec le capteur alors que le capteur est installé sur la jante de la roue.

## Claims

1. Axle end equipment for a vehicle, in particular an aircraft, the equipment comprising a stationary portion (100; 100'; 100") for securing to the axle (1) and a rotary portion (200; 200'; 200") for securing to the wheel (2) carried by the axle, the equipment being **characterized in that** it comprises first remote connection means (209/214; 209'/214'; 209"/214") for putting a sensor (211; 211'; 211") mounted on the wheel (2) into contactless electromagnetic relationship with the rotary portion of the equipment.

2. Equipment according to claim 1, in which it also includes second remote connection means (106/207; 106'/207'; 106"/207") for putting the rotary portion into electromagnetic relationship with the stationary portion, the first and second remote connection means being electrically connected in the rotary portion so that the sensor is in electromagnetic relationship with the stationary portion via the remote connection means.

3. Equipment according to claim 2, in which each of the first and second remote connection means comprises two antennas, each comprising a conductor winding and disposed facing each other so as to interact electromagnetically, one of the antennas (207; 207', 207") of the first remote connection means and one of the antennas (209; 209'; 209") of the second remote connection means being electrically interconnected in the rotary portion.

4. Equipment according to claim 3, in which the antenna (207; 207'; 207") of the first remote connection means and the antenna (209; 209'; 209") of the second remote connection means that are electrically interconnected in the rotary portion are integrated in an electrical circuit that is resonant at a frequency of a power supply current fed to the other antenna (106; 106'; 106") of the second remote connection means that is disposed on the stationary portion.

5. Equipment according to claim 1, in which the stationary portion carries a rotary member (103; 117'; 121") that is driven in rotation in operation by the rotary portion via quick disconnection drive means (203; 203'; 123").

6. Equipment according to claim 1, in which the stationary portion carries a drive motor (113'; 113") for driving an impeller (115'; 115") of a fan for a brake associated with the wheel.

7. Equipment according to claim 1, in which the first remote connection means includes an antenna (214) that is electrically connected to the sensor (211) while being offset therefrom so as to be located close to the rotary portion (200).

8. A method of maintaining equipment according to any preceding claim, in which the sensor (211) is tested remotely by means of an external unit (300) adapted to be brought into remote electromagnetic relationship with the sensor when the sensor is installed on the rim of the wheel.

## Patentansprüche

1. Endanordnung einer Achse eines Fahrzeugs, insbesondere eines Flugzeugs, umfassend einen feststehenden Abschnitt (100; 100'; 100"), der dazu bestimmt ist, fest mit der Radachse (1) verbunden zu werden, und einen sich drehenden Abschnitt (200; 200'; 200"), der dazu bestimmt ist, fest mit einem Rad (2) verbunden zu werden, das von der Radachse getragen wird, **dadurch gekennzeichnet, dass** die Anordnung erste Distanz-Verbindungsmittel (209/214; 209'/214'; 209"/214") umfasst, um einen Sensor (211; 211'; 211 "), der an dem Rad (2) angebracht ist, kontaktlos mit dem sich drehenden Teil der Anordnung in elektromagnetische Beziehung zu bringen.

2. Anordnung nach Anspruch 1, wobei die Anordnung ferner zweite Distanz-Verbindungsmittel (106/207; 106'/207'; 106"/207") umfasst, um den sich drehenden Abschnitt und den feststehenden Abschnitt in elektromagnetische Beziehung zu bringen, wobei die ersten und die zweiten Distanz-Verbindungsmittel in dem sich drehenden Abschnitt derart elektrisch verbunden sind, dass der Sensor über die Distanz-Verbindungsmittel mit dem feststehenden Abschnitt in elektromagnetischer Beziehung steht.

3. Anordnung nach Anspruch 2, wobei die ersten und die zweiten Distanz-Verbindungsmittel jeweils zwei Antennen umfassen, die jeweils aus einer Leiterwicklung bestehen und einander gegenüber angeordnet sind, um in elektromagnetischer Wechselwirkung zu stehen, wobei eine Antenne (207; 207'; 207") der ersten Distanz-Verbindungsmittel und eine Antenne (209, 209'; 209") der zweiten Distanz-Verbindungsmittel in dem sich drehenden Abschnitt elektrisch verbunden sind.

4. Anordnung nach Anspruch 3, wobei die Antenne (207; 207'; 207") der ersten Distanz-Verbindungsmittel und die Antenne (209; 209'; 209") der zweiten Distanz-Verbindungsmittel, die in dem sich drehenden Abschnitt elektrisch verbunden sind, in einen elektrischen Kreis integriert sind, der bei einer Frequenz eines Speisestroms der anderen Antenne (106; 106'; 106") der zweiten Verbindungsmittel in Resonanz schwingt, die auf dem feststehenden Abschnitt angeordnet ist.

5. Anordnung nach Anspruch 1, wobei der feststehende Abschnitt ein sich drehendes Element (103; 117'; 121") trägt, das im Betrieb von dem sich drehenden Abschnitt über Antriebsmittel mit Schnellentkupplung (203; 203'; 123") in Drehrichtung angetrieben wird.

6. Anordnung nach Anspruch 1, wobei der feststehende Abschnitt einen Antriebsmotor (113'; 113") zum Antrieb einer Turbine (115'; 115") zur Ventilation einer zu dem Rad gehörenden Bremse trägt.

7. Anordnung nach Anspruch 1, wobei die ersten Distanz-Verbindungsmittel eine Antenne (214) umfassen, die mit dem Sensor (211) elektrisch verbunden ist, indem sie von demselben verlagert ist, um sich in der Nähe des sich drehenden Abschnitts (200) zu erstrecken.

8. Verfahren zur Wartung einer Anordnung nach einem der vorhergehenden Ansprüche, wobei man den Sensor (211) mittels eines externen Gehäuses (300) ferntestet, das dazu geeignet ist, in elektromagnetischer Fern-Wechselwirkung mit dem Sensor zu stehen, während der Sensor an der Felge des Rades installiert ist.
